Europäisches Patentamt

European Patent Office

Office européen des brevets

(19)

(11) Publication number: 0 273 208 B1

## EUROPEAN PATENT SPECIFICATION

(12)

(45) Date of publication of patent specification: 12.10.94　(51) Int. Cl.5: **C08F 10/00**, C08F 4/16, C08F 4/64

(21) Application number: 87117600.4

(22) Date of filing: 27.11.87

(54) **Catalysts for the preparation of polyethylene with a wide distribution of molecular weights.**

(30) Priority: **02.12.86 IT 2253086**

(43) Date of publication of application:
**06.07.88 Bulletin 88/27**

(45) Publication of the grant of the patent:
**12.10.94 Bulletin 94/41**

(84) Designated Contracting States:
**BE DE FR GB NL**

(56) References cited:
**EP-A- 0 146 507**
**US-A- 4 562 170**

(73) Proprietor: **SPHERILENE S.r.l.**
**31, Foro Buonaparte**
**I-20121 Milan (IT)**

(72) Inventor: **Dall'Occo, Tiziano**
**9, via Cenni**
**I-44100 Ferrara (IT)**
Inventor: **Zucchini, Umberto**
**11, via G. Leopardi**
**I-44100 Ferrara (IT)**
Inventor: **Cuffiani, Illaro**
**33, via Bagaro**
**I-44100 Ferrara (IT)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

## Description

The present invention relates to novel solid components of catalysts for the polymerization of ethylene, and of its mixtures with alpha-olefins and/or dienes, which are capable of directly producing in a single step, polymers or copolymers endowed with a molecular weight distribution which is considerably broader than that which is generally obtained with the use of other catalysts of the Ziegler-Natta type of the prior art. The possibility of directly obtaining, by means of a simple process, and in a single step, polyethylenes having a broad molecular weight distribution, is considerably interesting at a practical level, because the demand for such polymers is very large in important application sectors (blow-moulding and extrusion for film production, containers, raffia, and so forth).

Some high-activity Ziegler-Natta type catalytic systems have been recently described which are able to produce, in a single-step process, polyethylenes with a broad molecular weight distribution; such catalytic systems comprise solid components which generally contain two compounds of Group IV transition metals, one of which is titanium, and the other is either zirconium or hafnium. In this respect DE-A-25 43 437 and 26 15 390, as well GB-A-2,015,548; EP-A-87,100; and US-A-4,554,265 can be mentioned.

Furthermore, EP-A-146507 discloses a catalyst for the homo- and copolymerization of ethylene which comprises a solid catalytic component obtained by reacting an alkylaluminium halide with the product of the reaction between an Hf halide, an Si alcoholate, an Mg halide, an aliphatic alcohol and a Ti alcoholate.

US-A-4562170 describes an olefin polymerization catalyst produced by treating an inert porous support material (preferably a certain type of silica) with the reaction product of an organomagnesium compound and first an Hf compound and then a halogenator and a tetravalent Ti compound. Said catalyst is reported to afford olefin polymers having a broad molecular weight distribution.

New solid components for the above catalysts have been found now, which are capable of producing, in one step, and with very high yields, ethylene polymers or copolymers, endowed with a very broad molecular weight distribution.

The present invention is therefore concerned with such solid catalytic components, their preparation, the catalysts formed with such components, the use of them in the polymerization of ethylene or of its mixtures with alpha-olefins and/or dienes, as well as with the so obtained polymers or copolymers.

Accordingly, the present invention provides solid catalyst components suitable for the polymerization of ethylene or mixtures thereof with alpha-olefins, comprising

A. an anhydrous magnesium halide, in active form, as the support;

B. a halogenated titanium compound;

C. a halogenated hafnium compound; in a molar ratio Mg/(Ti + Hf) ranging from 2:1 to 20:1 and a molar ratio Hf/Ti of from 0.4:1 to 1.5:1 (particularly 0.4:1 to 1:1) and obtainable by dry milling of mixtures comprising an anhydrous magnesium halide, one or more halogenated titanium compounds and one or more halogenated hafnium compounds.

A preferred anhydrous magnesium halide in active form (Component A) is an anhydrous magnesium chloride or bromide whose X-ray spectrum is characterized in that the highest-intensity line (as defined by ASTM Standards 3-0854 and 15-836), which appears at the "d" distance, of 0.256 nm (2.56 Å) and 0.293 nm (2.93 Å), respectively, is no longer present at said distance, and, instead of it, a halo is present, with an intensity peak which is shifted relatively to the "d" distance of said line. The B and C compounds, present in the solid components, are (tri- and tetravalent) titanium compounds and hafnium compounds, respectively which preferably contain, per each metal atom:

- at least 2 chlorine or bromine atoms;
- optionally, an oxygen atom, or one or two OR groups, wherein R is an alkyl, aryl or cycloalkyl radical of from 1 to 20 carbon atoms.

Particularly preferred halogenated titanium compounds are titanium tetrahalides and particularly preferred halogenated hafnium compounds are hafnium halides.

The solid components of the catalysts of the present invention are obtainable by dry milling of mixtures comprising:

(A) an anhydrous magnesium halide, preferably anhydrous magnesium chloride or bromide;

(B) one or more halogenated titanium compound(s);

(C) one or more halogenated hafnium compound(s).

Such mixtures, in addition to said components, can also contain inert supports, such as silica, alumina, zeolites, polyethylene and polystyrene. The milling can be carried out by using any known equipment (e.g., vibrating, rotary and centrifugal mills), by operating under such conditions that the magnesium halide (A) is present in the solid end component in the active form, the average size of the crystallites being preferably smaller than 30 nm (300 Å).

2

Typical examples of the halogenated titanium compound (B) are: $TiCl_4$, $TiCl_3$, $TiBr_4$, $TiBr_3$, $TiCl_2$, $TiCl_3$-$(OC_2H_5)$, $TiCl_2(OC_4H_9)_2$, $TiBr_2(OC_6H_5)$, $TiCl_2(OC_6H_5)$, $TiOCl_2$ and $TiOCl$.

Typical examples of the halogenated hafnium compound (C) are $HfCl_4$, $HfBr_4$, $HfCl_3$, $HfCl_2(OC_6H_{13})_2$ and $HfCl_3(OCH_3)$.

The amounts of (A), (B) and (C) components to be milled can vary within wide ranges, on condition that the above defined $Mg/(Ti+Hf)$ and $Hf/Ti$ ratios are met. The catalysts, which are a further object of the present invention, are obtainable by means of the reaction of an organometallic compound of aluminum with a solid catalyst component as defined hereinabove. As the organometallic compounds of Al, preferably the aluminum-trialkyls are used, such as aluminum triethyl, trisobutyl, tri-n-hexyl, tri-n-octyl, aluminum isopropenyl or aluminum alkyl hydrides, such as, e.g., aluminum diisobutyl hydride. The organometallic compound of aluminum generally is used, for the preparation of the catalysts of the present invention, in molar ratios higher than 1:1, and preferably higher than 5:1, relatively to the titanium compound present in the solid catalytic component.

The polymerization of ethylene and of its mixtures with alpha-olefins and/or dienes can be carried out according to any known process (e.g., the solution process, the suspension process, the gas-phase process, the high-pressure process), by operating both in the presence and in the absence of inert hydrocarbon vehicles. The alpha-olefins which are normally used as ethylene comonomers are propylene, butene-1, hexene-1, 4-methyl-pentene-1, octene-1, and so forth. As dienes, those with two conjugated or non-conjugated double bonds can be used, such as e.g., butadiene-1,3, hexadiene-1,4 and 5-ethylidene-2-norbornene.

During the polymerization, in order to control the molecular weight of the polymer, known chain-transfer agents, in particular hydrogen, zinc-alkyls or alkyl halides, can be used.

Hereunder some examples and comparative examples of preparation of solid catalyst components as well as the results of ethylene polymerization tests carried out by using the above catalysts are reported for exemplifying, non-limitative purposes.

EXAMPLES 1 - 7

Preparation of Solid Catalyst Component

To a porcelain jar, of 300 $cm^3$ capacity, containing 4 porcelain ovoids (longer diameter = 40 mm; shorter diameter = 26 mm), anhydrous $MgCl_2$, anhydrous $HfCl_4$ and freshly distilled $TiCl_4$ were charged under a nitrogen atmosphere, in such amounts as to have, in the catalytic component, the composition shown in Table A. The jar was then placed inside a centrifugal mill of SI type (marketed by RETSCH). The milling was carried out for 4 hours at room temperature, and the ground powder was then discharged from the jar and stored under a dry nitrogen atmosphere.

Ethylene Polymerization

The polymerization tests were run inside a stainless-steel autoclave of 2.5 litres of capacity, equipped with a magnetic stirrer. After an adequate purge with anhydrous nitrogen, the required amounts of the following were charged, in the order shown, at the temperature of 50°C:
- anhydrous hexane;
- aluminum trialkyl (TIBAL or TNOA, according to the individual example);
- the solid catalyst component, obtained as specified above.

The autoclave was sealed and heated up to the desired temperature; hydrogen and ethylene were fed until the desired pressure values were reached, and the total pressure reached was maintained constant, during the course of the polymerization, by continuously adding ethylene. After three hours, the ethylene supply was discontinued, the reactor was cooled down to room temperature, and, after the solvent separation, the obtained polymer was oven-dried at 70°C for 8 hours. In Table A, 7 tests of ethylene polymerization are reported; specified are: the composition and the amount of the solid catalyst component used, the adopted polymerization conditions, the polymer yields obtained (polymer kg/solid component g), the melt flow indices of the polymers (MIE and MIF; measurement according to ASTM D-1238, E and F conditions), as well as the MIF/MIE ratio which, as known, is correlated to the broadness of the molecular weight distribution.

EXAMPLES 8 - 9 (comparative examples)

Preparation of Solid Catalyst Component without Dry Milling

To a flask equipped with stirring means, of 100 cm$^3$ of capacity, 10.7 g of anhydrous magnesium chloride and 63.9 g of $AlC_2H_5Cl_2$ (Al/Mg molar ratio = 4.5) were charged under nitrogen.

The flask was heated, with stirring, to 120°C, and maintained at this temperature for 3 hours, until a clear liquid resulted. Inside another flask, 2.2 g of $HfCl_4$ and 3.4 g of $Ti(OC_4H_9)_4$ (Ti/Hf molar ratio = 1.43) were reacted at 140°C for 3 hours; then to the so-obtained homogeneous mass, 21.6 g of anisole (anisole/Ti molar ratio = 20) was added, at the temperature of 80°C. The reaction mixture was cooled, was diluted with 100 cm$^3$ of anhydrous n-heptane and, at the temperature of 15°C, the solution of $AlC_2H_5Cl_2$/$MgCl_2$ - (maintained at the temperature of 80°C) was added within 4 hours. A red precipitate resulted which, after a further 2 hours of stirring at 60°C, was decanted from the supernatant liquid, was washed with portions of 100 cm$^3$ of anhydrous hexane for 7 consecutive times, and was then decanted again and finally dried at room temperature and under reduced pressure.

Ethylene Polymerization

By operating according to the polymerization process as disclosed for Examples 1 - 7, 2 polymerization tests were run by using the solid catalyst component prepared above; the polymerization conditions and the results obtained are shown in Table B.

4

EP 0 273 208 B1

TABLE A

Ethylene Polymerization with Catalysts According to the Present Invention

| Example | Solid Catalyst Component | | | | Polymerization Conditions | | Yield (kg of PE/ catalyst g) | Obtained Polymer | | | REMARKS |
|---|---|---|---|---|---|---|---|---|---|---|---|
| | Composition (% by weight) | | | | $H_2$ (bars) | T (°C) | | MIE (g/10 minutes) | MIF (g/10 minutes) | MIF/MIE | |
| | Mg | Hf | Ti | g | | | | | | | |
| 1 | 19,7 | 5.2 | 3.4 | 0.025 | 6 | 75 | 8.8 | 0.19 | 14.7 | 77 | |
| 2 | 18.3 | 8.4 | 3.3 | 0.040 | 8 | 75 | 5.9 | 0.12 | 15.5 | 129 | |
| 3 | 18.3 | 8.4 | 3.3 | 0.019 | 7 | 85 | 5.9 | 1.16 | 76.3 | 66 | |
| 4 | 18.3 | 8.4 | 3.3 | 0.020 | 7 | 70 | 6.2 | 0.07 | 8.9 | 127 | |
| 5 | 18.3 | 8.4 | 3.3 | 0.040 | 10 | 75 | 5.2 | 0.32 | 32.4 | 101 | |
| 6* | 18.3 | 8.4 | 3.3 | 0.045 | 10 | 75 | 4.7 | 0.10 | 13.7 | 137 | *) 2 g of $Al(C_8H_{17})_3$ instead of $Al(i-C_4H_9)_3$ |
| 7 | 15.1 | 18.4 | 3.3 | 0.030 | 8 | 75 | 5.3 | 0.02 | 3.4 | 170 | |

Polymerization Conditions:

- Stainless-steel autoclave, capacity = 2.5 l; equipped with magnetic stirrer.
- Hexane: 1 litre; $Al(i-C_4H_9)_3$: 0.5 g; ethylene = 6 bars; polymerization time = 3 hours.

TABLE B

Ethylene Polymerization with Catalysts Prepared without Dry Milling

| (Comparative) | Solid Catalyst Component | | | | | | Polymerization Conditions | | Obtained Polymer | | | |
|---|---|---|---|---|---|---|---|---|---|---|---|---|
| | Composition (% by weight) | | | | | | | | | | | |
| Example | Mg | Hf | Ti | Cl | Al | g | $H_2$ (bars) | T (°C) | Yield (kg of PE/ catalyst g) | MIE (g/10 minutes) | MIF (g/10 minutes) | MIF/MIE |
| 8 | 10.1 | 7.3 | 2.8 | 57.6 | 5.7 | 0.019 | 8 | 75 | 6.4 | 1.15 | 72.4 | 63 |
| 9 | 10.1 | 7.3 | 2.8 | 57.6 | 5.7 | 0.020 | 6 | 75 | 7.1 | 0.70 | 30.8 | 44 |

The polymerization conditions are the same as shown in Table A.

## Claims

1. Solid catalyst components suitable for the polymerization of ethylene or mixtures thereof with alpha-olefins, comprising
   A. an anhydrous magnesium halide, in active form, as the support;

EP 0 273 208 B1

B. a halogenated titanium compound;

C. a halogenated hafnium compound; in a molar ratio Mg/(Ti + Hf) ranging from 2:1 to 20:1 and a molar ratio Hf/Ti of from 0.4:1 to 1.5:1 and obtainable by dry milling of mixtures comprising an anhydrous magnesium halide, one or more halogenated titanium compounds and one or more halogenated hafnium compounds.

2. Components according to claim 1, wherein the halogenated titanium compound is a titanium tetrahalide.

3. Components according to claim 1 or 2, wherein the hafnium compound is selected from hafnium halides.

4. Catalysts for the polymerization of ethylene or of mixtures thereof with alpha-olefins comprising:
   a) an organometallic compound of Al;
   b) a solid catalyst component according to any one of claims 1 to 3.

5. Use of the catalysts of claim 4 for the preparation of ethylene homopolymers or copolymers of ethylene with alpha-olefins and/or copolymerizable dienic monomers.

**Patentansprüche**

1. Feste Katalysatorkomponenten, die zur Polymerisation von Ethylen oder dessen Mischungen mit alpha-Olefinen geeignet sind, umfassend:
   A. ein wasserfreies Magnesiumhalogenid, in aktiver Form, als Träger;
   B. eine halogenierte Titanverbindung;
   C. eine halogenierte Hafniumverbindung; in einem Molverhältnis Mg/(Ti + Hf) im Bereich von 2:1 bis 20:1 und einem Molverhältnis Hf/Ti von 0,4:1 bis 1,5:1 und erhältlich durch Trockenvermahlung von Mischungen, die ein wasserfreies Magnesiumhalogenid, ein oder mehrere halogenierte Titanverbindungen und ein oder mehrere halogenierte Hafniumverbindungen umfassen.

2. Komponenten nach Anspruch 1, worin die halogenierte Titanverbindung ein Titantetrahalogenid ist.

3. Komponenten nach Anspruch 1 oder 2, worin die Hafniumverbindung aus Hafniumhalogeniden ausgewählt ist.

4. Katalysatoren zur Polymerisation von Ethylen oder dessen Mischungen mit alpha-Olefinen, umfassend:
   a) eine organometallische Verbindung von Al;
   b) eine feste Katalysatorkomponente nach einem der Ansprüche 1 bis 3.

5. Verwendung der Katalysatoren nach Anspruch 4 zur Herstellung von Ethylenhomopolymeren oder von Copolymeren von Ethylen mit alpha-Olefinen und/oder copolymerisierbaren dienischen Monomeren.

**Revendications**

1. Composants catalytiques solides appropriés pour la polymérisation d'éthylène ou de mélanges d'éthylène avec des alpha-oléfines, comprenant:
   A. un halogénure de magnésium anhydre, sous forme active, en tant que support;
   B. un dérivé de titane halogéné;
   C. un dérivé d'hafnium halogéné; dans un rapport molaire Mg(Ti + Hf) de 2/1 à 20/1, et un rapport molaire Hf/Ti de 0,4/1 à 1,5/1, et pouvant être obtenu par broyage à sec de mélanges comprenant un halogénure de magnésium anhydre, un ou plusieurs dérivés de titane halogéné, et un ou plusieurs dérivés d'hafnium halogénés.

2. Composants selon la revendication 1, caractérisé en ce que le dérivé de titane halogéné est un tétrahalogénure de titane.

3. Composants selon la revendication 1 ou 2, caractérisé en ce que le dérivé d'hafnium est sélectionné parmi les halogénures d'hafnium.

7

4. Catalyseurs pour la polymérisation d'éthylène ou de mélanges d'éthylène avec les alpha-oléfines, comprenant:
   a) un dérivé organométallique de Al;
   b) un composant catalytique solide, selon l'une quelconque des revendications 1 à 3.

5. Utilisation de catalyseurs selon la revendication 4 pour la préparation d'homopolymères d'éthylène ou de copolymères d'éthylène avec des alphaoléfines et/ou des monomères diéniques copolymérisables.